Europäisches Patentamt

European Patent Office

Office européen des brevets

(11) Numéro de publication: **0 220 159 B1**

# (12) FASCICULE DE BREVET EUROPEEN

(45) Date de publication de fascicule du brevet:
03.07.91

(51) Int. Cl.5: **C04B 41/81, B41M 1/34**

(21) Numéro de dépôt: **86870151.7**

(22) Date de dépôt: **17.10.86**

(54) Procédé permettant l'impression ou le revêtement de céramique simultanément à son électroformage et conduisant en monocuisson à des produits décoratifs ou techniques.

(30) Priorité: **18.10.85 LU 86128**

(43) Date de publication de la demande:
**29.04.87 Bulletin 87/18**

(45) Mention de la délivrance du brevet:
**03.07.91 Bulletin 91/27**

(84) Etats contractants désignés:
**BE DE FR GB IT NL**

(56) Documents cités:
EP-A- 0 022 113
EP-A- 0 117 968
FR-A- 2 004 171
FR-A- 2 036 218

CHEMICAL ABSTRACTS, vol. 96, no. 20, mai 1982, page 313, résumé no. 167463x, Columbus, Ohio, US; & JP-A-81 169 314 (NIPPON ELECTRIC CO., LTD) 26-12-1981

SPRECHSAAL, vol. 115, no. 9, septembre 1982, pages 817-822, Coburg, DE; "Dekormaschinen für die keramische, Glas- und Email-Industrie"

(73) Titulaire: **ANDROMAQUE S.A.**
**121 Avenue de la Faiencerie**
**L-1511 Luxembourg(LU)**

Titulaire: **S.A. WARNETON INDUSTRIE**
**Chaussée de Lille, 61**
**B-7790 Comines-Warneton(BE)**

(72) Inventeur: **Vander Poorten, Henri**
**Rue Vandervelde, 277**
**B-7000 Mons(BE)**

(74) Mandataire: **Colens, Alain M.G.M.**
**BUGNION S.A. Rue de Namur 43-b.3 Naamsestraat**
**B-1000 Bruxelles(BE)**

## Description

La présente invention concerne un procédé d'impression ou de revêtements s'appliquant au façonnage de céramique par électrodéposition selon les techniques ayant fait l'objet des brevets belges 873 378, 880 993, 895 717 ou encore des techniques d'électroformage de céramique plate ou creuse.

Ce procédé a la particularité de s'effectuer simultanément à l'opération de façonnage et conduit dès lors en monocuisson à des produits finis de céramique décorative, de bâtiment, réfractaires, céramiques techniques à usage électrique, électronique, mécanique, thermique, en vitrocéramique, ou néocéramique.

Les techniques d'électroformage auxquelles s'appliquent les diverses versions du procédé d'impression que l'on va décrire, sont tout spécialement des techniques procédant par l'intermédiaire de membranes échangeuses ou non d'ions fonctionnant en discontinu ou en continu.

D'une façon générale, ce procédé consiste à façonner des pièces céramiques sur des supports souples, rigides, semi-rigides, perméables aux ions et traversés par un courant, qui est engendré par une tension continue appliquée entre des électrodes (une anode et une cathode) situées de part et d'autre de la membrane. Du côté anodique, on travaille au moyen d'une solution électrolytique ordinaire ou gélifiée ou encore imbibant une structure poreuse (feutre par exemple).

La nature des membranes sera indiquée ci-après; elles constitueront dans tous les cas des supports provisoires de façonnage.

Les caractéristiques du façonnage par électrodéposition en comparaison à d'autres techniques de façonnage en céramique sont données dans les brevets indiqués ci-dessus.

Les systèmes d'impression et de décoration utilisés actuellement en céramique, sont à ce point variés qu'il n'est pas possible d'en faire état et l'on peut se reporter aux nombreux ouvrages spécialisés. Le livre de John W. Conrad ayant pour titre "Contemporary Ceramic techniques", édité en 1979 par Prentice-Hall Inc. aux USA (New Jersey) fait un état des techniques récentes de décoration céramique. On y trouve également une abondante bibliographie du sujet, aux pages 173 à 177.

La caractéristique la plus générale et la plus commune de toutes les techniques de décoration ou de revêtement utilisées à ce jour en céramique, c'est le fait qu'elles s'effectuent au cours d'opérations succédant le façonnage.

Certes, certaines techniques d'impression de relief, d'apport d'émail ou autre composant en poudre dans le façonnage par pressage dans des moules (technique de l'incrustation de l'émail), sont utilisées en céramique. Mais c'est loin d'être la généralité. Par ailleurs, l'objet de la présente invention concerne moins les apports de reliefs que la décoration sous forme de motifs reproduits sur la surface des pièces électrofaçonnées.

La production de céramique avec relief par électroformage a été décrite dans les brevets antérieurs cités ci-dessus.

Dans la présente invention, on adapte un certain nombre de techniques d'impression connue en céramique, en reproduction de documents dans le textile, au façonnage par éléctrodéposition avec la particularité nouvelle d'effectuer en une seule opération, l'impression et le façonnage conduisant dès lors nécessairement à une étape unique de cuisson (monocuisson).

On peut remarquer que même la monocuisson classique s'opère sur des objets céramiques dont le façonnage, l'émaillage et la décoration en cru s'effectuent le plus couramment en deux opérations distinctes au moins.

L'invention concerne un procédé d'impression de la céramique, caractérisé en ce que l'impression est simultanée à l'électrofaçonnage et que cet électrofaçonnage se réalise via une membrane perméable aux ions et comportant un motif,

ledit motif se présentant sous la forme soit de perforations, soit de préimpressions réalisées par rouleau d'imprimerie, par offset, par sérigraphie ou par développement d'images électrostatiques latente à l'aide d'encres ou de poudres céramiques mouillables et perméables aux ions issus des anodes d'électrofaçonnage et se trouvant du côté de la membrane où se façonne la pâte,

ledit motif étant transféré sur la pâte céramique électrofaçonnée, et donnant en une seule opération de cuisson une pièce céramique comportant un motif de décoration, une reproduction photographique, un texte, ou un motif à usage technique.

Pour chacune des techniques proposées ici, le principe de base concerne l'utilisation d'un support intermédiaire d'électrofaçonnage. On envisage d'abord l'électrofaçonnage sérigraphique, dans lequel on part d'un procédé sérigraphique pour préparer ou réaliser la membrane qui va servir à l'électrofaçonnage de la céramique décorée.

Pour la céramique plane ou légèrement courbée (plaques, carrelages, panneaux) cette technique consiste à préparer par sérigraphie classique à encres ou poudres céramiques (émaux, glaçures, colorants d'oxydes), les membranes servant à l'éctrofaçonnage de la céramique.

Les encres céramiques sont à base de liants hydrophiles tels que carboxyméthyl cellulose, amidons, etc... et les poudres doivent être mouillables par l'eau (oxydes, hydroxydes, carbonates, sulfures, etc...) et donner lieu lors de la cuisson à un émail ou une coloration du tesson céramique pour réaliser l'impression d'un motif.

Les supports imprimés par sérigraphie peuvent être de deux types :
soit sacrificiels, soit permanents.

Dans le cas des supports sacrificiels, il s'agit de membranes qui accompagneront les pâtes céramiques électroformées à la cuisson et qui s'élimineront par la combustion sans laisser de traces. Seules les encres ou poudres céramiques appliquées par sérigraphie et transférées sur la pâte subsisteront sur la céramique cuite. On peut utiliser des supports en papier cellulosique ou des pellicules de cellophane à faibles teneurs en cendres.

Pratiquement tous les supports de ce type ayant la propriété d'être suffisamment mouillables par l'eau et perméables aux ions issus de l'anode, sont utilisables. On choisira de préférence les supports combustibles gardant une résistance mécanique suffisante à l'état humide et présentant en présence d'eau les changements dimensionnels les moins importants.

Ces supports, une fois imprimés, sont appliqués avec précaution sur l'électrode de façonnage en veillant à assurer un bon contact en tout point, c'est-à-dire en évitant toute rétention d'air ou tout pli de la membrane.

La meilleure façon d'opérer est d'appliquer la membrane imprimée, l'encre d'impression étant préalablement séchée, sur l'électrode mouillée par l'eau ou avec une solution aqueuse d'alcool polyvinylique. Il est nécessaire pour assurer le transfert du motif sur la céramique que l'impression de la membrane soit du côté où se façonne la pâte, c'est-à-dire du côté de la membrane opposé à celui de l'électrode d'électro-façonnage.

L'application de la membrane imprimée par sérigraphie se fait préférentiellement avec un rouleau souple à revêtement non mouillable et d'une manière très douce pour ne pas altérer le motif.

L'épaisseur de l'encrage ou du poudrage à travers l'écran de sérigraphie sera ajustée selon la nature des éléments de décoration (glaçures, sous-émail, colorants, etc...), les effets à obtenir après cuisson, la nature du tesson, l'adhérence plus ou moins forte des encres ou des poudres au support imprimé.

La nature de l'électrode sur laquelle on applique ces supports et les conditions d'électrolyse seront choisies de manière à éviter les dégagements d'oxygène susceptibles de contrarier l'électrofaçonnage des pièces. Le zinc sera particulièrement favorable spécialement lorsqu'on désire éviter toute coloration de la céramique autre que celles apportées par sérigraphie.

Mais on peut utiliser aussi de l'étain, de l'aluminium, du fer, du cobalt, du cuivre, du chrome, du plomb ainsi que des alliages à dissolution anodique uniforme. En général, la densité de courant varie de 5 à 15 mA/cm2, les tensions de 10 à 15 volts/cm. La composition de la barbotine pour l'électrofaçonnage ne doit présenter aucune particularité vis-à-vis des indications contenues dans les brevets cités ci-avant comme référence, pour l'éctrofaçonnage.

Pour les applications techniques (mécaniques, résistances à l'abrasion, électroniques ou électrotechniques, thermiques), la méthode par sérigraphie peut être utilisée pour des revêtements uniformes ou non de pièces céramiques. On peut ainsi réaliser des couches minces selon un motif quelconque de composés tels que l'alumine, la zircone, le zircon, le carbure de silicium, l'oxyde d'étain, la mullite, la sillimanite, apportées sur des tessons de nature très variée et pouvant être façonnés par électrodéposition.

Pour les applications à la réalisation d'éléments chauffants ou d'éléments absorbants de rayonnement solaire en céramique, les composés actifs peuvent être apportés par la technique faisant l'objet de la présente invention. Dans certains cas, l'élément dopant pour réaliser la semi-conductivité des composés actifs de surface peut être apporté par l'anode servant à l'électrofaçonnage. On peut ainsi doper au cuivre l'oxyde d'étain déposé préalablement par sérigraphie sur la membrane d'électro-déposition en fixant celle-ci sur une électrode de cuivre. La pièce céramique électrofaçonnée comportera dès lors, après cuisson, une pellicule de surface semi-conductrice uniforme ou répartie selon un motif quelconque.

Par application ultérieure d'amenées de courant, on peut ainsi réaliser des éléments chauffants avec supports réfractaires.

Des circuits électriques sur supports diélectriques peuvent être réalisés de cette façon au départ d'un motif préparé selon les exigences classiques d'une impression sérigraphique.

Dans les cas où lors du séchage et de la cuisson le transfert du motif s'effectue d'une manière imparfaite, on peut être amené à améliorer ce transfert après séparation de l'électrode de façonnage.

La pâte céramique est séparée de l'électrode par l'intermédiaire de la membrane imprimée sur laquelle elle est récupérée pour les opérations de séchage et de cuisson. Avant séchage, on peut améliorer le transfert du motif par l'intermédiaire d'un rouleau qu'on applique du côté de la membrane de façon à imprégner ce motif dans la pâte molle. On peut également asperger un solvant sur la face supérieure de la membrane pour faciliter le décrochage du motif imprimé et le transfert vers la pâte. Le solvant est choisi d'après la nature de l'encre céramique utilisée lors de l'opération préalable de sérigraphie.

Dans certains cas, il est possible de retirer la membrane avant séchage et cuisson lorsque le transfert du motif sur la pâte céramique s'est effectué intégralement. Si la membrane peut être ainsi éliminée avant séchage et cuisson, c'est la meilleure façon d'opérer et d'être absolument assuré que ni le séchage ni les traitements ultérieurs de cuisson n'apportent des perturbations dans l'impression des motifs.

Dans le cas de supports permanents, non sacrificiels, on utilise des toiles textiles (fibres artificielles ou naturelles) sur lesquelles sont apportés les motifs à imprimer par sérigraphie. Dans ce cas, il est indispensable que le motif soit directement emporté par la pâte électrodéposée sur ces toiles lors du démoulage.

Dans le cas des membranes sacrificielles, les moyens cités ci-dessus pour améliorer ou garantir le transfert du motif (rouleau, solvant), sont également parfaitement utilisables.

Dans les systèmes d'électrofaçonnage discontinus, on peut utiliser des pièces de toile libres appliquées sur l'électrode de façonnage. On peut également monter les toiles sur des cadres comme celles servant à la sérigraphie. Dans les systèmes continus où l'électrode est constituée d'un cylindre tournant dans la barbotine, la toile est constituée d'un ruban continu subissant les impressions par sérigraphie avant le contact avec l'électrode et l'entrée dans la cellule d'électrolyse.

L'électrodépôt de pâte s'effectuant naturellement dans cette cellule, la toile imprimée entraîne la pâte hors de la cellule et elle est démoulée avec le motif imprimé avant nettoyage et réimpression de la bande. Le système peut être conçu pour une avance "pas à pas" de manière à ce que la durée d'impression par sérigraphie corresponde à la durée d'électrolyse, la bande de toile formant un ruban continu sans fin.

On utilisera les mêmes électrodes métalliques et dans les mêmes conditions que celles citées pour les membranes sacrificielles.

La durée de l'électrolyse dépend entre autres de l'épaisseur de la couche céramique désirée, de la nature de la barbotine et de la nature de l'anode et variera de préférence entre 5 et 25 minutes.

Il est possible aussi d'introduire dans cet électrolyte d'imbibition des éléments susceptibles d'améliorer le transfert des encres d'impression tels que des alcools ou tout autre solvant présent dans les encres céramiques utilisées dans l'opération de sérigraphie. Il est nécessaire que les éléments liants de ces encres soient de nature hydrophile tels les amidons, les colles cellulosiques, la carboxyméthylcellulose.

Il est possible également comme autre variante, d'utiliser la sérigraphie d'une manière plus indirecte en utilisant les décalcomanies ou les éléments "transferts" (type lettres à transférer) préalablement préparés par sérigraphie.

Dans ce cas, il est nécessaire que les encres utilisées pour ces décalcomanies ou transferts soient mouillables par l'eau et conservent pour les épaisseurs utilisées une perméabilité aux ions suffisante pour assurer l'électrodéposition, comme d'ailleurs dans les cas cités précédemment.

Dans cette variante, on transfère d'abord ces éléments de décoration "préfabriqués" depuis leur support vers les membranes sacrificielles ou permanentes d'électrofaçonnage. Celles-ci sont introduites dans les cellules d'électrofaçonnage.

Naturellement, cette technique peut aussi être envisagée comme préparation à l'avance des membranes avec motifs à transférer. Il faut, dans ce cas, choisir l'élément support des décalcomanies (ou transferts) de manière à ce qu'ils puissent servir directement de membrane d'électrodéposition et que les motifs de décoration en encres céramiques soient bien entraînés par la pâte céramique électrofaçonnée sur ces supports.

Par ailleurs, dans le cas des procédés continus ou discontinus d'électroformage de céramique avec membrane, celle-ci peut naturellement être préimprimée par des techniques d'encrage classique à savoir par des rouleaux gravés ou perforés alimentés soit extérieurement soit intérieurement par des encres céramiques ou encore par la technique offset avec ces mêmes encres céramiques.

Pour la céramique non plane, il va s'agir d'une impression indirecte réalisable selon la technique précédente et qui consiste à réaliser d'abord une fine (± 2 mm) couche de pâte avec l'impression désirée suivie d'un collage en pâte molle sur l'objet céramique non plan. Ce collage peut s'effectuer à l'aide de barbotine de collage sur des objets façonnés par électrodéposition (comme décrit dans les brevets relatifs à l'électroformage d'objets creux) ou par d'autres techniques de façonnage.

Une autre version du procédé consiste à effectuer l'électrofaçonnage aux stencils. Par définition, le stencil est constitué par un écran dans lequel on a pratiqué des ouvertures généralement destinées à laisser passer de l'encre d'impression.

En électrofaçonnage pratiqué sur membrane, il est possible d'utiliser un stencil en guise de membrane à placer sur l'électrode de façonnage.

On a dès lors une membrane de perméabilité localement variable qui a comme conséquence de donner en regard des ouvertures de faibles surépaisseurs d'électrodépôts. Ceci a pour conséquence de reproduire un motif visible d'une part par le léger relief et d'autre part des colorations plus accusées lorsque des anodes chromogènes, sont utilisées, celles-ci émettant plus d'ions colorants en regard des ouvertures.

Cette méthode générale présente plusieurs variantes selon la nature du stencil, la technique de perforation, la nature de l'anode et la nature des applications.

Sur le plan de l'application à l'électrofaçonnage, objet de la présente invention, les stencils doivent présenter une mouillabilité par l'eau et une conductibilité ionique puisqu'on utilise le stencil comme membrane dans une cellule d'électrolyse fixée sur l'anode, et qu'ils constituent le siège du façonnage de la céramique.

Les stencils en papier ordinaire sont généralement mouillables et perméables aux ions. Ils permettent dès lors de réaliser un électrofaçonnage à travers l'ensemble du stencil en privilégiant les endroits perforés. Le relief obtenu dépend de l'épaisseur du papier, de sa conductibilité ionique, de l'aire des ouvertures.

Les stencils réalisés en matériau non mouillable et non perméable aux ions, donnent lieu à électrodéposition uniquement en regard des ouvertures qui y sont pratiquées. Ce type de stencil est idéalement utilisé pour réaliser des pièces céramiques ajourées, de petits éléments indépendants en céramique fine avec contours quelconques, ceci par des perforations très localisées.

Il est possible d'utiliser des stencils, généralement plus solides que ceux en papier, pour réaliser des pièces céramiques continues avec une impression en léger relief, en perforant le stencil sous forme de petites ouvertures (maximum 0,1 mm) mais très régulièrement réparties. C'est la façon dont on obtient en reproduction d'imprimerie habituelle sur une tireuse classique des "fonds gris". Des perforations supplémentaires réalisent le motif en surimpression. D'une certaine façon, on réalise une "trame" qui assure le façonnage d'une pièce céramique continue d'une épaisseur relativement constante.

Les stencils en papier ordinaire ne sont généralement utilisables que pour un nombre limité de pièces céramiques. On peut augmenter leur durée d'utilisation en les recouvrant d'une membrane de cellophane. Le stencil reste dans ce cas fixé sur l'électrode et le dépôt céramique avec son impression est récupéré sur le film de cellophane.

On peut utiliser des stencils photographiques tels que ceux employés habituellement en sérigraphie pour l'impression sur papier ou sur tissu. Il s'agit de films présensibilisés ou tissus de carbone sensibilisés au dichromate de potassium (voir détails sur les stencils photographiés dans l'ouvrage de J.W. Conrad cité ci-avant). Pour être utilisé dans le cadre de l'électrofaçonnage de pièces céramiques sans trous, il faut s'adresser à des motifs du type "demi-teinte" généralement obtenus avec une trame ou avec des films prétramés de façon à ce qu'au développement et à la fixation, il y ait une perméabilité générale pour assurer l'électrodéposition d'une manière relativement uniforme. Le motif se dégagera sur un fond continu.

Ces films exigent généralement au départ une diapositive. S'il s'agit d'une diapositive petit format, on aura besoin d'un agrandisseur ou d'un projecteur pour impressionner le film stencil. Avec des diapositives de grand format, on procédera par contacts dans un dispositif sous vide ou par simple pressage comme dans une tireuse ordinaire.

Il est à remarquer que dans ce procédé de céramique imprimée par stencil et électrofaçonnage, les motifs pour lesquels le sens a de l'importance (par exemple pour des textes), il faut reproduire sur le stencil le motif à l'envers. Ceci est général pour toutes les techniques faisant l'objet de la présente invention.

Pour la perforation du stencil, on peut utiliser des machines à perforer mécaniquement ou électroniquement d'après un modèle quelconque. Une stencileuse électronique classique peut convenir parfaitement. Elles sont généralement conçues pour de petits formats tels que A4. Mais leur principe peut être appliqué pour la réalisation de stencils de plus grands formats. On peut reproduire avec ou sans tramage des dessins très compliqués ou des photographies avec des détails très fins.

On a cité ci-dessus les stencils photographiques qui sont réalisés d'après une diapositive tramée ou non et dont les perforations s'effectuent par des réactifs adéquats selon les plages exposées ou non à la lumière.

Des variantes sont possibles selon la nature de l'anode. On peut obtenir par exemple avec une anode non colorante telle que le zinc; l'impression obtenue sur la céramique électrofaçonnée via un stencil quelconque est dans ce cas surtout visible par le léger relief correspondant aux parties perforées du stencil.

Il est néanmoins envisageable avant de retirer ce stencil en vue du séchage et de la cuisson, d'appliquer un ou plusieurs colorants (encres céramiques, barbotines d'émaux, suspensions d'oxydes colorants), ce qui va occasionner la coloration en correspondance avec les plages ouvertes du stencil.

On retire le stencil avant séchage et cuisson. Avec des anodes chromogènes telles que le cobalt, le fer, le chrome, le nickel, le cuivre, le plomb et alliages, on peut obtenir directement des motifs colorés (monocoloration) par l'intermédiaire des ions colorants qui se retrouvent en concentration plus forte en regard des plages ouvertes du stencil.

La diffusion des ions chromogènes dans l'électrodépôt de céramique empêche souvent l'obtention d'images très nettes.

Mais dans certains cas, et pour des motifs sans trop de fins détails, l'effet obtenu est très réussi.

Pour des applications techniques (électronique ou électrotechnique), on peut utiliser les effets obtenus par cette technique pour répartir des ions selon des motifs variés dans des supports céramiques (circuits imprimés sur substrat céramique).

Comme pour la technique d'électrofaçonnage sérigraphique, on peut utiliser la technique d'électrofaçonnage sur stencil pour des objets céramiques plats (ou légèrement courbes) ou pour des objets creux. Dans ce dernier cas, on fabrique des couches minces avec les impressions et on les colle avec de la barbotine de collage sur les céramiques en pâte humide.

On peut également prévoir l'électrofaçonnage avec impressions électrostatiques. Cette troisième version du procédé de fabrication de céramique par électrofaçonnage avec impression simultanée, utilise des supports préalablement imprimés par des procédés électrostatiques haute tension.

Dans cette version du procédé, on utilise un support papier ou tissu convenant à la fois comme membrane pour l'électrofaçonnage et comme support pour l'impression d'un motif par effet "corona" avec une encre à base de pigment minéral.

La technique d'impression peut être inspirée de celle qui est mise en oeuvre dans les "photocopieuses" et qui comprend les phases principales suivantes :

- Exposition de préconditionnement sur un tambour photosensible.
- Charge générale du tambour par effet corona.
- Exposition du motif à reproduire et réalisation de l'image latente.
- Développement électrostatique de cette image latente à l'aide d'un cylindre de développement; l'encre doit être à base d'un pigment minéral magnétique susceptible après transfert sur la pâte céramique et cuisson de reproduire le motif.
- Transfert de l'encre depuis la surface du tambour photosensible vers le papier ou tissu.
- La fixation de l'image par effet contrôlé de pression et de chauffage.

La technique générale étant classiquement exploitée dans les photocopieuses, celle-ci ne sera pas détaillée.

L'adaptation de cette technique générale au procédé faisant l'objet de la présente invention doit être faite sur les plans suivants :

- L'encre doit être à base de pigment minéral (oxydes magnétiques, ferrites ou autre minéral aux propriétés magnétiques).
- Le transfert doit se faire sur un support mouillable et perméable aux ions.
- La fixation de l'image ne doit pas être poussée trop loin car l'image formée d'encre céramique doit être aisément transférable sur la pâte céramique électroformée.
- L'alimentation du dispositif de reproduction doit pouvoir se faire avec support en rouleau pour adaptation aux machines continue.

Ce procédé consiste donc à utiliser le support comportant l'impression électrostatique constituée d'encre à effet décoratif ultérieur sur la céramique et à utiliser ce support comme membrane d'électrofaçonnage dans la cellule d'électrodéposition et à récupérer la pièce céramique formée sur ce support.

Il y a différentes manières d'opérer pour la suite. Ou bien la pâte céramique est séchée et cuite avec la membrane. Dans ce cas, le support doit rester adhérer parfaitement à la pièce au cours du séchage et lors de la cuisson, le transfert de l'image doit avoir lieu avant combustion du support. C'est alors la technique du support sacrificiel.

Dans certains cas, il est préférable d'éliminer le support avant séchage et cuisson. Dans ce cas, l'image doit être transférée d'abord sur la pâte céramique à l'aide d'un solvant adapté au type d'encre utilisé (par exemple alcools acétone, tétrachlorure de carbone, diméthylformamide) et d'un rouleau pour faciliter le collage de l'image à la pâte.

Cette technique de transfert du motif décoratif sur la pâte est naturellement inévitable dans le cas où on utilise un support permanent (tissu) susceptible, après nettoyage, d'être réutilisé pour l'impression et l'électrofaçonnage.

On peut envisager l'utilisation de ce procédé dans les techniques d'électrofaçonnage de céramique en continu ou en discontinu faisant l'objet des brevets sur l'électrofaçonnage cités en référence dans tous les cas où la technique est mise en oeuvre avec des électrodes munies de membranes.

Par utilisation d'encres contenant des pigments colorants minéraux ou des éléments d'émaux de couleurs différentes, et en mettant en oeuvre la technique de photocopie en couleur, il est possible d'adapter le procédé à la fabrication de céramique avec motif multicoloré.

Grâce à cette dernière technique basée sur l'emploi des images électrostatiques, la reproduction extrêmement fidèle de motifs très détaillés au trait, en demi-teinte, tramés, qu'elle permet de réaliser sur céramique en même temps que le façonnage de celle-ci, la technique d'électrofaçonnage brevetée antérieurement par l'inventeur est considérablement valorisée vis-à-vis des techniques de façonnage et de décoration classique en céramique. Non seulement il n'est plus nécessaire d'avoir recours aux décalcomanies traditionnelles mais façonnage et décoration simultanés peuvent s'opérer sur des plaques céramiques dont le format peut aller jusqu'à 75 x 120 cm. Cette performance est liée à la fois aux procédés d'électrofaçonnage et aux procédés d'impression simultanée tels que décrits par la présente invention. La reproduction de grands tableaux sous la forme de panneaux céramiques en une seule pièce devient donc réalisable.

Les exemples suivants illustrent l'invention de manière non limitative.

Exemple 1

Electroformage utilisant la technique de sérigraphie

Pour obtenir le motif décoratif sur la membrane, la technique sérigraphique est utilisée avec un tissu de nylon (100 mesh) . Le support de la membrane est constituée d'une plaque de cuivre qui sert d'électrode d'électroformage. Une encre céramique composée de 50% de matière sèche broyée (émail), 10 % de carboxyméthylcellulose comme liant et 40% d'eau est d'abord passée à travers un tamis de 200 mesh. La membrane de réception est une feuille de papier ordinaire à base de fibre de cellulose et d'une charge de kaolin. L'électrode de cuivre et la membrane est alors introduite dans la cellule d'électroformage, l'électrolyse étant conduite à 30 volts et 7 mA/cm2 durant 15 minutes avec une composition céramique comprenant 34 % d'eau, 22% de kaolin , 22% d'argile et 22 % de feldspath. La membrane supportant la pâte de céramique est alors séparée de l'anode de cuivre. La membrane est détachée de la pâte céramique, l'encre céramique restant incrustée dans la pâte. Le séchage et la cuisson sont effectuées dans les con ditions classiques ( séchage progressif de 20 deg C et cuisson jusqu'a 1180 deg C). La décoration sérigraphique sur céramique est ainsi obtenue en une seule opération de cuisson.

Exemple 2

Electroformage avec empreinte électrostatique

On utilise dans le cas de reproduction de photocopie des photocopies sur papier ordinaire, l'encre étant cependant à base d'oxyde de fer magnétique (Fe304). On place la photocopie comprenant le motif à transférer (texte ou photo) sur une plaque mouillée de zinc avec le motif opposé à la face en contact avec la plaque. La plaque de zinc est introduite dans la cellule d'électrolyse et sert d'anode. L'électrolyse est effectuée à 30 volts et 7 mA/cm2 durant 10 minutes dans une barbotine comprenant une composition de porcelaine classique. La pâte céramique avec la photocopie est alors détachée de la plaque de zinc. La photocopie n'est pas détachée de la pâte céramique . Le séchage et la cuisson sont effectués dans des conditions classiques pour des compositions de porcelaine . Un four électrique est utilisé à cette fin. Les cendres provenant de la combustion du papier sont éventuellement éliminées par brossage. Les plaques de céramique imprimées sont ainsi obtenues avec des épaisseurs de 3 à 6 mm .

**Revendications**

1. Procédé d'impression de la céramique , caractérisé en ce que l'impression est simultanée à l'électrofaçonnage et que cet électrofaconnage se réalise via une membrane perméable aux ions et comportant un motif ,

   ledit motif se présentant sous la forme soit de perforations, soit de préimpressions réalisées par rouleau d'imprimerie, par offset, par sérigraphie ou par développement d'images électrostatiques latente à l'aide d'encres ou de poudres céramiques mouillables et perméables aux ions issus des anodes d'électrofaconnage et se trouvant du côté de la membrane où se façonne la pâte,

   ledit motif étant transféré sur la pâte céramique électrofaçonnée, et donnant en une seule opération de cuisson une pièce céramique comportant un motif de décoration , une reproduction photographique, un texte, ou un motif à usage technique.

2. Procédé selon la revendication 1 caractérisé en ce que le motif se trouve sous la forme de perforations, la membrane étant un stencil présentant une conductivité ionique et l'anode d'electroformage étant constituée d'un métal dont les cations sont colorants et responsables de la reproduction du motif de la céramique électroformée après cuisson.

3. Procédé selon la revendication 2 caractérisé en ce que le stencil est perforé avec une stencilleuse électronique permettant ainsi la reproduction de textes, de dessins et de photographies tramées.

4. Procédé selon la revendication 3 caractérisé en ce que les perforations sont de maximum 0,1 mm d'ouverture.

5. Procédé selon la revendication 4 caractérisé en ce que les perforations produisent une 'trame', des perforations supplémentaires réalisant le motif en surimpression.

6. Procédé selon la revendication 1 caractérisé en ce que le motif se trouve sous la forme d'images électrostatiques latentes révélées par des pigments constitués d'oxydes minéraux.

7. Procédé selon la revendication 6 caractérisé en ce que le pigment minéral est à base d'oxyde de fer magnétique.

8. Procédé selon la revendication 1 caractérisé en ce que des émaux céramiques mouillables et perméables aux ions issus de l'anode sont transférés sur la membrane d'électroformage , en épaisseur qui peut être ajustée, par sérigraphie et donnant après électroformage et monocuisson une céramique électroformée avec un motif multicolore constitué d'émaux incrustés dans la masse de céramique.

9. Procédé selon les revendications 1 à 8 caractérisé en ce que le motif reproduit une photographie.

10. Procédé selon les revendications 1 à 9 dans lequel la membrane est séparée de l'objet électrofaçonné préalablement à la monocuisson.

11. Procédé selon les revendications 1 à 10 dans lequel la membrane est sacrifiée par combustion lors de la cuisson de la céramique.

12. Procédé selon la revendication 1 caractérisé en ce que la membrane est constituée d'une pièce de toile, d'un tissu, d'un film prétramé ou non , d'un film de cellophane ou d'un papier cellulosique et permettant la perméabilité à l'eau et aux ions issus de l'anode.

## Claims

1. Process for printing ceramics characterised by the fact that printing is simultaneous with electroforming and that such electroforming is effected via a diaphragm permeable by ions and comprising a motif,
said motif being in the form of either perforations or preprints made by a printing roller, by offset, by silk-screen or by development of latent electrostatic images using ceramic inks or powders wettable and permeable by ions emerging from the electroforming anodes, and being present on the side of the diaphragm where the paste is electroformed,

said motif being transferred to the electroformed ceramic paste ,

and providing in a single firing step, a ceramic article comprising a decorative motif, a photographic reproduction, a text or a motif for technical use.

2. A process according to claim 1 characterised by the fact that the motif is made out of perforations, the diaphragm being a stencil having a ionic conductivity and the electroforming anode being made of a metal for which the corresponding cations are coloured and responsible for the reproduction of the motif of the electroformed ceramic after firing.

3. A process according to claim 2 characterised by the fact that the stencil is perforated with a electronic stencilling machine capable of reproducing texts, drawings and photographs with half-tone screening effects.

4. A process according to claim 3 characterised by the fact that the perforations are of maximum 0.1 mm aperture.

5. A process according to claim 4 characterised by the fact that the performations provide a screen, additional perforations producing the motif by overprinting.

6. A process according to claim 1 characterised by the fact that the motif is provided by latent electrostatic images which are developed by mineral oxide based pigments.

7. A process according to claim 1 characterised by the fact that the mineral pigment is based on magnetic iron oxide.

8. A process according to claim 1 characterised by the fact that the enamels wettable and permeable by ions emerging from the anode are transferred on the electroforming diaphragms, with a desired thickness, by silk-screen, and providing after electroforming and single firing a electroformed ceramic article with a multicoloured motif made out of incrusted enamels in the ceramic body.

9. A process according to claims 1 to 8 characterised in that the motif reproduced a photograph.

10. A process according to claims 1 to 9 wherein the diaphragm is removed from the electroformed article before single firing.

11. A process according to claims 1 to 9 wherein the diaphragm is sacrificed by burning it during the firing of the ceramic article.

12. A process according to claim 1 characterised by the fact that the diaphragm is made out of a piece of fabric, a cloth, a film, pre-screened or not, a cellophane film or a cellulosic paper permeable to water and to ions issuing from the anode.

**Ansprüche**

1. Verfahren zum Bedrucken von Keramik, dadurch gekennzeichnet, daß der Druck gleichzeitig mit der Elektroformung und diese Elektroformung über eine für Ionen durchlässige und ein Motiv tragende Membran erfolgt, wobei das Motiv als Perforation oder als vorheriger Aufdruck durch eine Druckwalze entsteht oder durch Offset, Siebdruck oder als entwikkeltes, latentelektrostatisches Bild mit Hilfe von Druckfarben oder anfeuchtbaren, für Ionen durchlässigen, von der Elektroformungsanode ausgehenden keramischen Pulvern erzeugt wird, und sich das Motiv auf der die Keramik-Masse formenden Membranseite befindet, wobei nach Übertragung des Motivs auf die durch Elektroformung bearbeitete Keramik-Masse in einem einzigen Brennvorgang ein Keramikgegenstand entsteht, der eine fotografische Reproduktion, einen Text oder ein für technische oder dekorative Zwecke dienendes Motiv trägt.

2. Verfahren nach Anspruch 1, dadurch gekennzeichnet, daß das als Perforation vorliegende Motiv auf einer Druckmatrize angeordnet ist, die eine Ionen-Leitfähigkeit aufweist, und die Elektroformungs-Anode aus einem Metall besteht, dessen Kationen Färbeeigenschaften aufweisen und die Reproduktion des Motivs auf der nach dem Brand eletrogeformten Keramik bewirken.

3. Verfahren nach Anspruch 2, dadurch gekennzeichnet, daß die Druckmatrize mit einer elektronischen Nadel-anordnung perforiert wird, die die Reproduktion von Texten, Zeichnungen und/oder gerasterten Fotografien ermöglicht.

4. Verfahren nach Anspruch 3, dadurch gekennzeichnet, daß die Perforierung höchstens einen Lochdurchmesser von 0,1 mm aufweist.

5. Verfahren nach Anspruch 4, dadurch gekennzeichnet, daß, nachdem ein Raster durch Perforierung entstanden ist, das Motiv durch Überdrucken mit Hilfe einer zusätzlichen Perforierung bewirkt wird.

6. Verfahren nach Anspruch 1, dadurch gekennzeichnet, daß das als latentelektrostatisches Bild vorhandene Motiv durch aus mineralischen Oxiden bestehende Pigmente sichtbar gemacht wird.

7. Verfahren nach Anspruch 6, dadurch gekennzeichnet, daß die mineralischen Pigmente auf der Basis von magnetischen Eisenoxiden aufgebaut sind.

8. Verfahren nach Anspruch 1, dadurch gekennzeichnet, daß keramische Glasuren, die anfeuchtbar und durchlässig für die von der Anode ausgesandten Ionen sind, durch Siebdruck in der gewünschten Dicke auf die Elektroformungsmembran übertragen werden und nach der Elektroformung und dem Monobrand eine elektrogeformte Keramik mit einem mehrfarbigen Motiv ergeben, das aus den in der Keramik-Masse inkrustierten Glasuren besteht.

9. Verfahren nach den Ansprüchen 1 bis 8, dadurch gekennzeichnet, daß durch das Motiv eine fotografische Anfnahme wiedergegeben wird.

10. Verfahren nach den Ansprüchen 1 bis 9, dadurch gekennzeichnet, daß die Membran vor dem Monobrand von dem elektrogeformten Objekt getrennt wird.

11. Verfahren nach den Ansprüchen 1 bis 9, dadurch gekennzeichnet, daß die Membran während des Brandes der Keramik durch Verbrennen geopfert wird.

12. Verfahren nach Anspruch 1, dadurch gekennzeichnet, daß die Membran aus einem Stück eines Netzes oder eines Gewebes besteht, aus einer vorgerasterten oder nichtgerasterten Folie, aus einem Zellophanfilm oder einem Zellulosepapier, die durchlässig für Wasser und/oder von der Anode herkommende Ionen sind.